Europäisches Patentamt

European Patent Office

Office européen des brevets

(11) Publication number: **0 264 205 B1**

# EUROPEAN PATENT SPECIFICATION

(45) Date of publication of patent specification: **23.12.92**   (51) Int. Cl.5: **H04Q 7/02**

(21) Application number: **87308566.6**

(22) Date of filing: **28.09.87**

(54) **Radio paging system with different transmission speeds and receiver therefor.**

(30) Priority: **30.09.86 JP 232577/86**

(43) Date of publication of application:
**20.04.88 Bulletin 88/16**

(45) Publication of the grant of the patent:
**23.12.92 Bulletin 92/52**

(84) Designated Contracting States:
**GB NL SE**

(56) References cited:
**EP-A- 0 108 938**
**WO-A-82/01268**
**FR-A- 2 296 320**
**US-A- 4 394 642**

**PATENT ABSTRACTS OF JAPAN, vol. 8, no.
209 (E-268)[1646], 22nd September 1984 &
JP-A-59 95 743**

**C. MACCHI et al.: "Téléinformatique. Trans-
port et traitement de l'information dans les
réseaux et systèmes téléinformatiques", edi-
tion 2, 1983, pages 116-126, Dunod Infor-
matique, Paris, FR**

(73) Proprietor: **NEC CORPORATION
7-1, Shiba 5-chome Minato-ku
Tokyo 108-01(JP)**

(72) Inventor: **Sato, Toshifumi c/o NEC Corpora-
tion
33-1, Shiba 5-chome
Minato-ku Tokyo(JP)**
Inventor: **Oyagi, Takashi c/o NEC Corporation
33-1, Shiba 5-chome
Minato-ku Tokyo(JP)**

(74) Representative: **Orchard, Oliver John
JOHN ORCHARD & CO. Staple Inn Buildings
North High Holborn
London WC1V 7PZ(GB)**

## Description

### BACKGROUND OF THE INVENTION

The present invention relates to a radio paging system and, more particularly, to a paging system which offers a service at several different bit rates and a receiver for the same.

The current trend in paging systems is towards a higher bit rate which would enable an increase in traffic as well as the effective use of frequency. A method heretofore proposed for increasing the bit rate of a paging signal consists in simply multiplying clock frequency by N to make the bit rate N-fold. This kind of method, however, has some problems as enumerated below.

(1) Receivers of different bit rates cannot coexist in a single paging system; and

(2) while each codeword usually undergoes error correcting coding, an increase in bit rate results in a decrease in the time length of one codeword and, therefore, the signal becomes susceptible to burst errors which frequently occurs on radio channels due to fading.

Another prior art implementation for higher bit rates is changing the bit rate depending upon the kind of information (e.g. 300 bits per second for an address and 600 bits per second for a message), as disclosed in, for example, U.S. Patent 4,642,632 which is assigned to the applicant of the instant application and issued February 10, 1987 to Ohyagi et al. Such an implementation, however, is incapable of changing the bit rate depending upon the traffic because the bit rate for one kind of information is fixed (e.g. 300 bits per second for an address without exception).

A feature of an embodiment to be described is the provision of a radio paging system which accommodates receivers of different bit rates, and is resistive to burst errors even if the bit rate is increased.

In a particular embodiment to be described a transmitter for a paging system includes degree indicating means for producing a first signal representative of a degree N in response to a signal which is representative of a bit rate N•R, where N is a positive integer and R is a basic bit rate, interleaving means for N-degree interleaving input data having the bit rate N•R in response to the first signal to produce an interleaved signal, and transmitting means for transmitting the interleaved signal.

A paging receiver to be described includes receiving means for receiving a signal whose bit rate is N•R where N is a positive integer and R is a basic bit rate; bit rate indicating means for outputting a first signal which is representative of the N; de-interleaving means for N-degree de-interleaving the received signal in response to the first signal to produce a de-interleaved signal; and deciding means for deciding whether or not a paging address number included in the de-interleaved signal is an address number which is assigned to the receiver.

Specifically, the interleave and de-interleave degree is varied in proportion to the bit rate, i.e., the second-degree de-interleave is performed when the bit rate is 2R (N = 2), third-degree de-interleave is performed when the bit rate is 3R (N = 3), and N-degree de-interleave is performed when the bit rate is N•R.

Embodiments of the invention will now be described, by way of example, with reference to the accompanying drawings in which:

Fig. 1 is a schematic block diagram showing a transmitting side of a radio paging system embodying the present invention;

Fig. 2 is a block diagram showing a specific construction of an interleave circuit which is included in the system of Fig. 1;

Figs. 3A to 3D are views each showing a sequence for designating addresses of a random access memory (RAM) as shown in Fig. 2;

Fig. 4 is a timing chart demonstrating the operation of the interleave circuit of Fig. 2;

Fig. 5 is a schematic block diagram showing a receiver of the radio paging system in accordance with the present invention;

Fig. 6 is a timing chart representative of the operation of the circuit shown in Fig. 5;

Fig. 7 is a block diagram showing a specific construction of a de-interleave circuit which is built in the receiver of Fig. 5; and

Fig. 8 is a timing chart representative of the operation of the de-interleave circuit shown in Fig. 7.

### DETAILED DESCRIPTION OF THE EMBODIMENTS

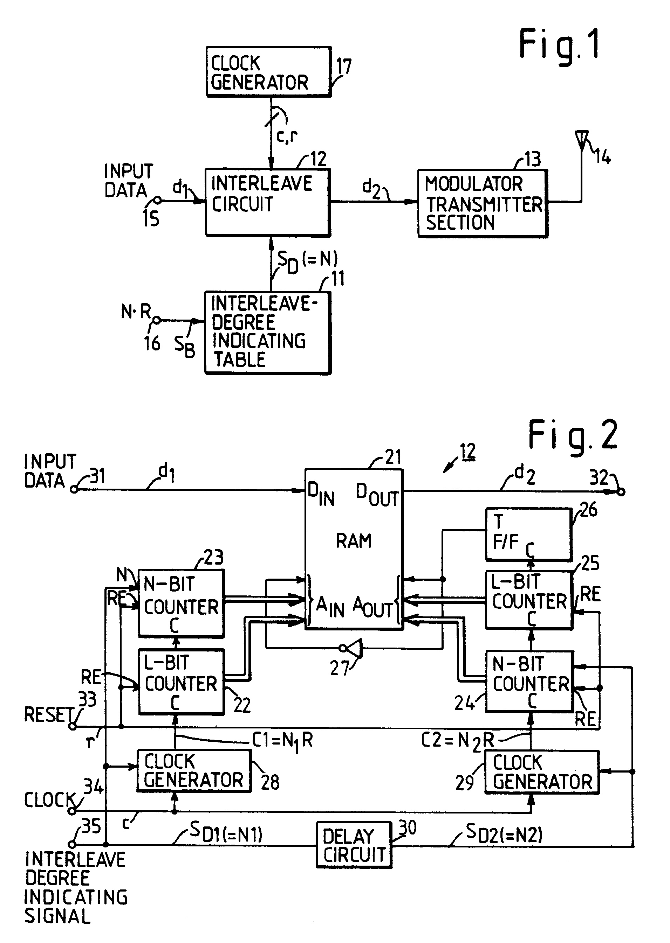

Referring to Fig. 1, a transmitting side of a radio paging system in accordance with the present invention is shown and includes an interleave-degree indicating table 11. A signal $S_B$ for designating a particular bit rate of transmit data is applied through a terminal 16 to the interleave-degree indicating table 11 which then produces a signal $S_D$ for indicating an interleave degree proportional to the designated bit rate. For example, when the designated bit rate is N•R (N = 1, 2, 4, 8, ...), the table 11 produces an interleave degree indicating signal $S_D$ of N. Here, R is representative of a basic bit rate which is to be used while interleave is not performed. The output $S_D$ of the table 11 is fed to an interleave circuit 12. Also fed to the interleave circuit 12 area clock (c) and a reset (r) pulse which are generated by a clock generator 17. In response, the interleave circuit 12 applies N-degree interleave to input data $d_1$ which come in through a terminal 15, the resulting signal $d_2$ being delivered to a modulator and transmitter section 13. This section 13 modulates a carrier wave with the signal $d_2$ by, for example, the frequency shift keying (FSK) principle and, then, transmits it through an antenna 14.

The signal $S_B$ indicating the bit rate $N \cdot R$ may be serial data which is fed from a telephone exchange. In such a case, the interleave-degree indicating table 11 may be implemented with a serial-to-parallel (S/P) converter for converting the serial data into parallel data, and a read-only memory (ROM) for producing a signal $S_D$ indicating the interleave degree data N addressed by the parallel data.

Referring to Fig. 2, the interleave circuit 12 is shown in detail. As shown, the interleave circuit 12 includes a random access memory (RAM) 21, N-bit counters 23 and 24, L-bit counters 22 and 25, a T flip-flop (F/F) 26, an inverter 27, clock generators 28 and 29, and a delay circuit 30. Here, L is representative of the length of a codeword to be interleaved. The input data $d_1$ applied to an input terminal 31 are sequentially written in those memory areas of the RAM 21 which are specified by addresses which are in turn designated by the L-bit counter 22 and N-bit counter 23. The output data $d_2$ are sequentially read out of those areas of the RAM 21 which are designated by the addresses which are in turn designated by the L-bit counter 25 and N-bit counter 24, the data $d_2$ being applied to an output terminal 32. The RAM 21 is divided into two discrete banks one of which is used for read-out while the other is used for write-in. Specifically, a write bank and a read bank are alternately selected on an interleave block basis by the T F/F 26 and inverter 27.

The clock generators 28 and 29 generate, respectively, clocks c1 and c2 ($= N_1 \cdot R$ and $N_2 \cdot R$) which are proportional to the interleave degrees $N_1$ and $N_2$, respectively. The delay circuit 30 serves to delay the input $S_{D1}$ indicating $N_1$ by one interleave block, producing a signal $S_{D2}$ indicating the interleave degree $N_2$ of output data $d_2$.

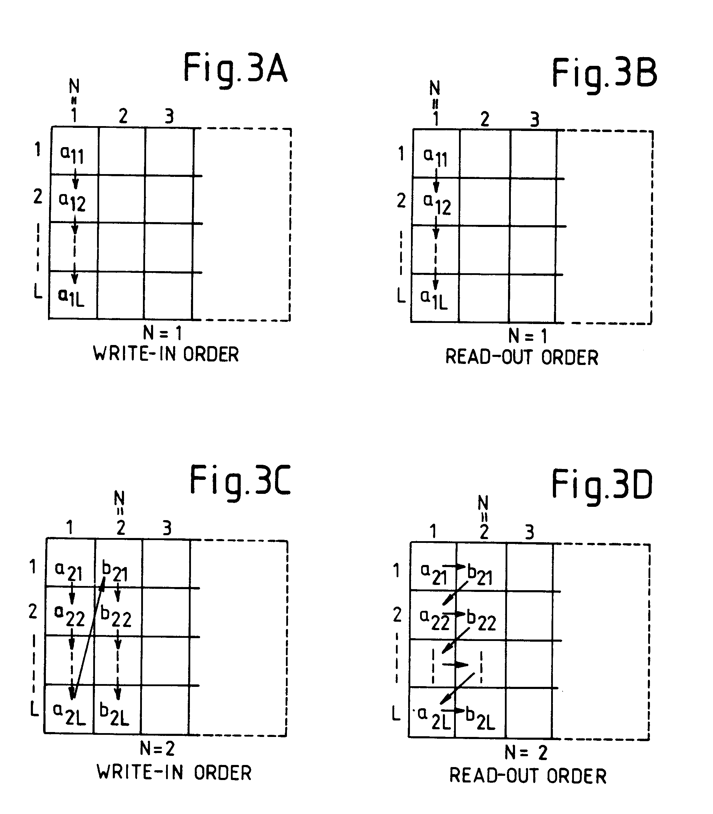

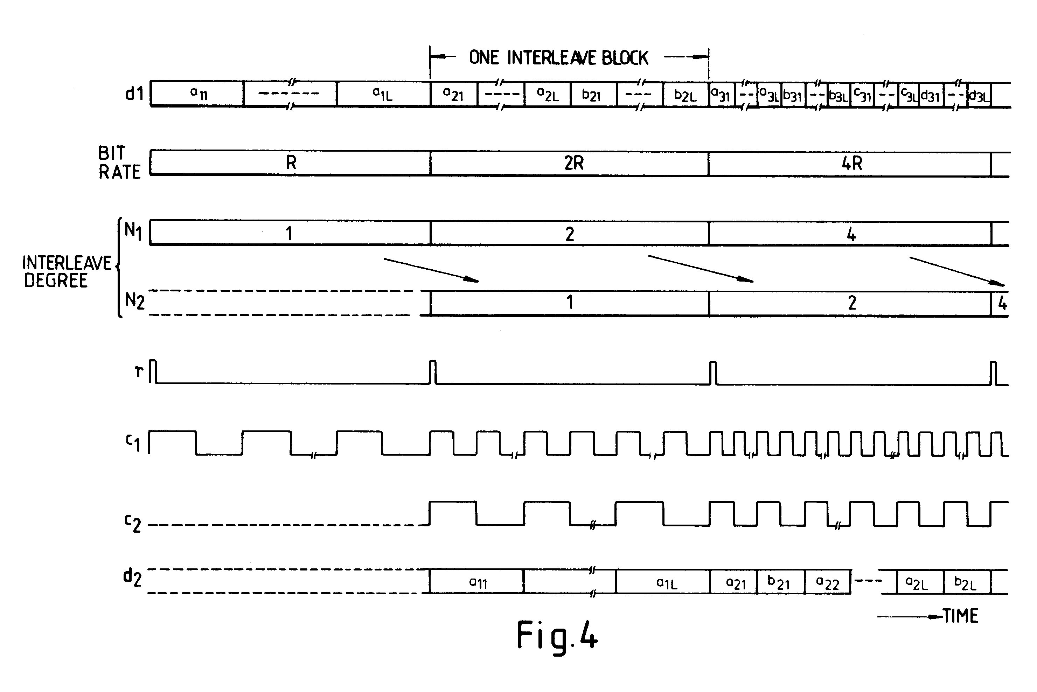

The operation of the circuit shown in Fig. 2 will be described with reference to Figs. 3A to 3D and 4. In the figures, L is representative of the codeword length of a paging signal, and one interleave block length is assumed to be N x L. Further, $(a_{11}, a_{12}, ..., a_{1L})$, $(a_{21}, a_{22}, ...., a_{2L})$, $(b_{21}, b_{22}, ..., b_{2L})$ each are a codeword of a paging signal. As shown in Fig. 4, assuming that the transmit data $d_1$ are different in bit rate from one interleave block to another, each interleave block having a fixed length. The interleave degree is proportional to the bit rate. While the interleave degree $N_1$ is adapted for writing data $d_1$ in the RAM 21, the interleave degree $N_2$ is an interleave degree which occurs one block after the interleave degree $N_1$ and is adapted for reading data $d_2$ out of the RAM 21. Clocks c1 and c2 have, respectively, frequencies $N_1 \cdot R$ and $N_2 \cdot R$ which are proportional to the interleave frequencies $N_1$ and $N_2$ respectively. A reset signal $\tau$ is applied to a terminal 33, Fig. 2, at the head of an interleave block as occasion demands, in order to match in phase the write-in counters 22 and 23 and the read-out counters 24 and 25.

The input data $d_1$ are written in those memory areas of the RAM 21 which are designated by the addresses as specified by the L-bit and N-bit counters 22 and 23 respectively, in either one of the sequences shown in Figs. 3A and 3C. Specifically, Fig. 3A shows a write-in order for the interleave degree of 1; the input data are written in the sequence of $a_{11}, a_{12}, ..., a_{1L}$. Fig. 3C shows a write-in order for the interleave degree of 2; the input data are written in the sequence of $a_{21}, a_{22}, ..., a_{2L}$ and, then, $b_{21}, b_{22}, ..., b_{2L}$. On the other hand, the output data $d_2$ are read out of those memory areas of the RAM 21 which are designated by the addresses as specified by the N-bit and L-bit counters 24 and 25, respectively, in the order shown in Fig. 3B or 3D. Specifically, Fig. 3B shows a read-out order corresponding to the interleave degree of l; the data are read out in the same sequence as they are written in. Fig. 3D shows a read-out order corresponding to the interleave degree of 2; the data are read out in the sequence of $a_{21}, b_{21}, a_{22}, b_{22}, ..., a_{2L}, b_{2L}$. As a result, as shown at the bottom of Fig. 4, the transmit data $d_2$ are produced interleaved at the interleave degree which is proportional to the bit rate.

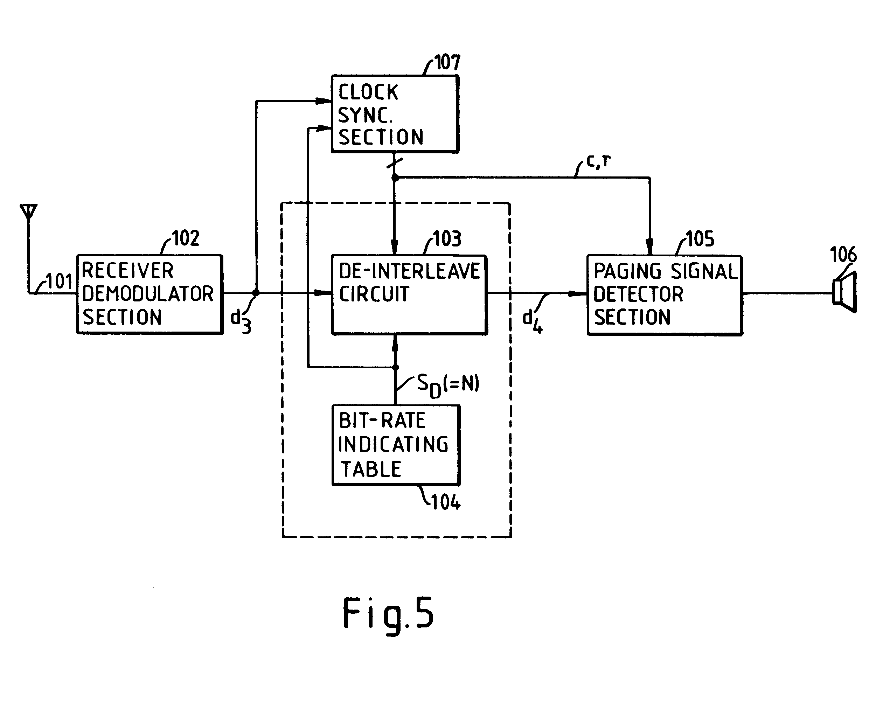

Referring to Fig. 5, a receiver of the paging system in accordance with the present invention is shown. As shown, the receiver includes an antenna 101 and a receiver and demodulator section 102 which receives and demodulates a modulated carrier wave coming in through the antenna 101 to produce a demodulated signal $d_3$. The carrier wave may be FSK modulated. A de-interleave circuit, or N-degree de-interleave means 103, N-degree de-interleaves the demodulated signal $d_3$ in accordance with a bit rate ($N \cdot R$) which is specified by a bit-rate indicating table, or bit-rate indicating means, 104. It is to be noted that data indicating the degree N are stored in the table 104 beforehand. A paging signal detector section 105 energizes a speaker or like annunciating means 106 when it has detected a paging signal from the receiver as a de-interleaved output $d_4$ of the de-interleave circuit 103. Further, a clock sync section 107 functions to produce a clock c and a reset pulse $\tau$ which are synchronous to the demodulated

signal $d_3$, at the bit rate specified by the bit-rate indicating table 104.

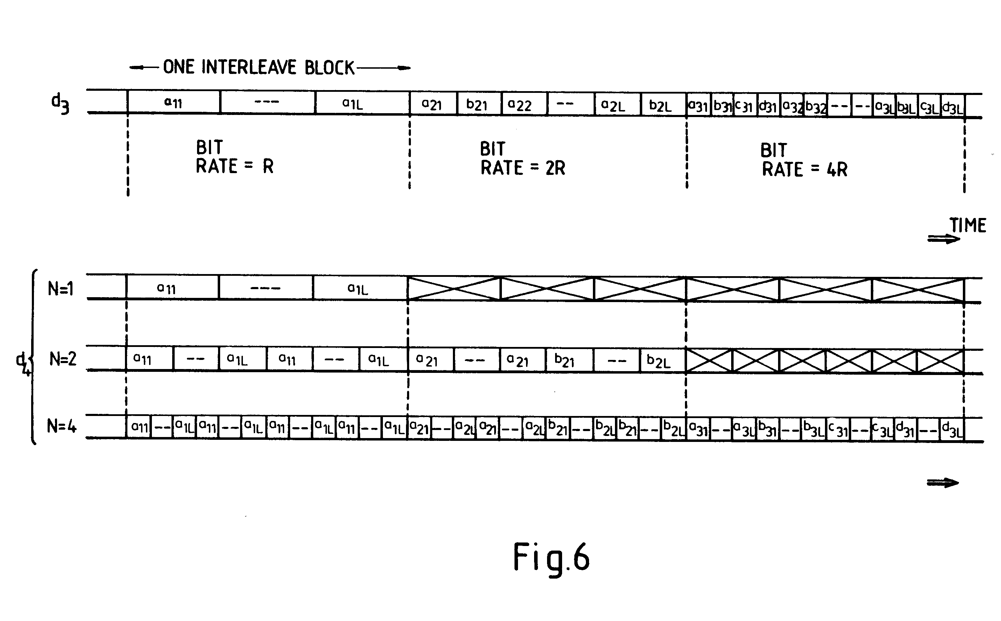

In Fig. 6, $d_3$ and $d_4$ are representative of, respectively, the demodulated signal $d_3$ and the deinterleaved signal $d_4$ as shown in Fig. 5, N being assumed to be 1, 2 and 4. The codeword length of a paging signal is assumed to be L and the interleave block length, N x L. Also, $(a_{11}, a_{12}, ..., a_{1L})$, $(a_{21}, a_{22}, ..., a_{2L})$ and so on each represents a codeword of a paging signal.

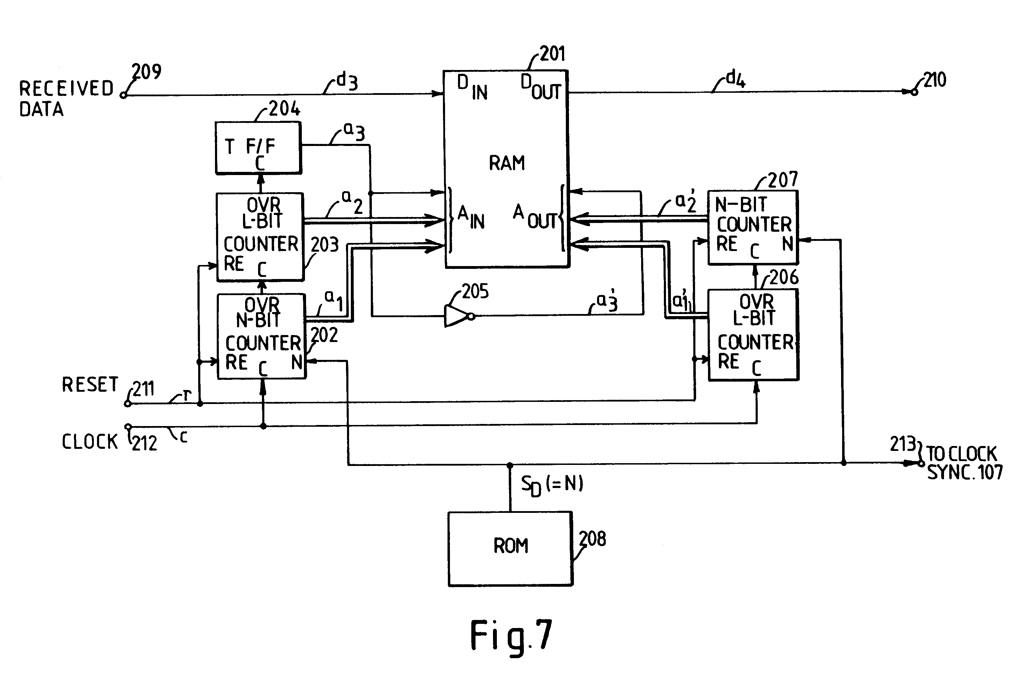

Referring to Fig. 7, a specific construction of the bit rate designating means 104 and N-degree de-interleave means 103 of Fig. 5 is shown in a block diagram. In the figure, there is shown a RAM 201 having a data input terminal $D_{IN}$, a data output terminal $D_{OUT}$, an input address input terminal $A_{IN}$, and an output address input terminal $A_{OUT}$. Assuming that the codeword length of the paging signal is L, the interleave degree is N, and the interleave block length is N x L, there are provided L-bit counters 203 and 206, N-bit counters 202 and 207, and a T F/F 204. In the various sections shown in Fig. 7, C,RE, N and OVR stand for, respectively, a clock input terminal, a reset input terminal, a frequency division number (N) input terminal, and an overflow output terminal. The reference numeral 205 designates an inverter. The circuit elements 201 to 207 described so far constitute the N-degree de-interleaving means.

A ROM 208 which corresponds to the bit rate indicating table 104 of Fig. 5 is adapted to designate a bit rate (N•R) and produces a signal $S_D$ indicating a value N. Here, the basic bit rate R is assumed to be determined beforehand.

The input address ($A_{IN}$) of the RAM 201 is designated by the N-bit counter 202, L-bit counter 203 and T F/F 204. Assuming that the output signals of the counters 202 and 203 and T F/F 204 are respectively $a_1$, $a_2$ and $a_3$ ($a_1$ = 0 to (N-1), $a_2$ = 0 to (L-1), $a_3$ = 0 or 1), the input address ($A_{IN}$), is expressed as:

$$A_{IN} = a_3 \cdot L \cdot N + a_2 \cdot N + a_1$$

Likewise, the output address ($A_{OUT}$) is designated by the L-bit counter 206, N-bit counter 207 and inverter 205. Assuming that the output signals of the L-bit counter 206, N-bit counter 207 and inverter 205 are, respectively, $a'_1$, $a'_2$ and $a'_3$ ($a'_1$ = 0 to (L-1), $a'_2$ = 0 to (N-1), $a'_3$ = 0 or 1), the output address ($A_{OUT}$) is given by:

$$A_{OUT} = a'_3 \cdot L \cdot N + a'_2 \cdot L + a'_1$$

where $a'_3$ is an inverted version of $a_3$, i.e., when $a_3$ is 0, a'3 is 1 while, when $a_3$ is 1, a'3 is 0.

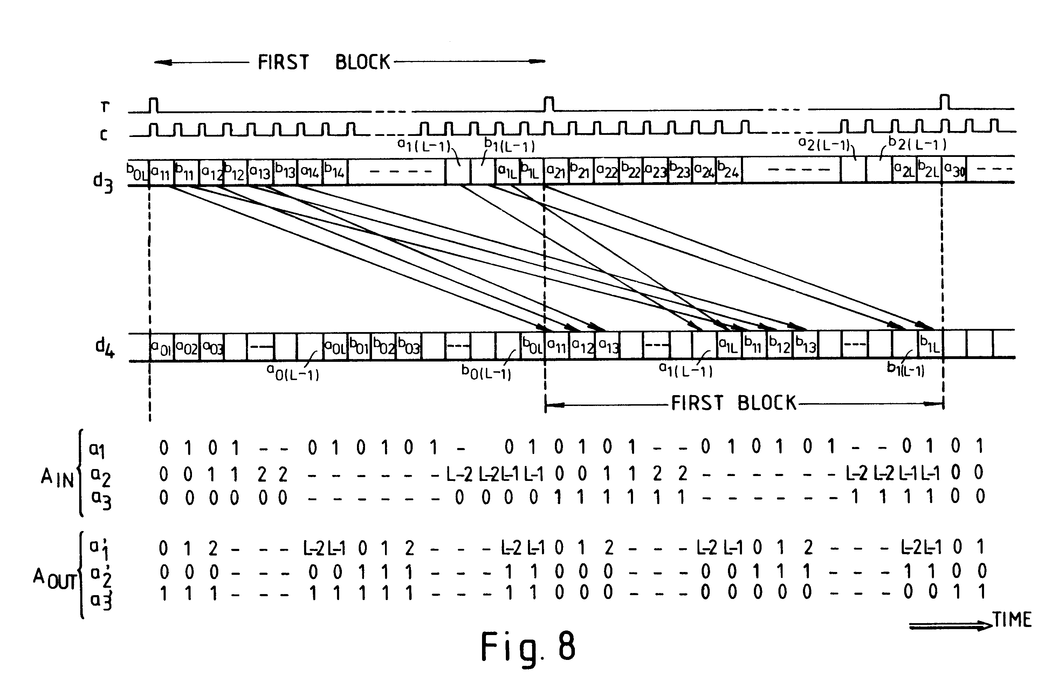

Hence, the data applied to the RAM 201 are N-degree deinterleaved and, then, outputted by the RAM 201. Specifically, when N is 2, the data which are inputted in the sequence of $a_{11}$, $b_{11}$, $a_{12}$, $b_{12}$, $a_{13}$, $b_{13}$, ..., $a_{1L}$, $b_{1L}$, ... are outputted in the sequence of $a_{11}$, $a_{12}$, $a_{13}$, ..., $a_{1L}$, $b_{11}$, $b_{12}$, $b_{13}$, ..., $b_{1L}$, ..., as shown in Fig. 8. It is to be noted that one block of delay occurs because RAM 201 has two discrete banks. Contrary to the interleaving circuit (Fig. 2), however, no delay circuit is required because a bit rate of N•R is fixed for the receiver.

In summary, it will be seen from the particular embodiments described that one paging system can accommodate receivers of different bit rates since de-interleave of a degree which is proportional to a bit rate (N•R) is performed, allowing a transmitting bit rate which matches with a message or traffic to be selected. Further, because the codeword length (time length) of a paging signal remains constant within the range of time lag of 1/R with no regard to the bit rate, burst errors of substantially the same length, which frequently occur on a radio channel due to fading, can be corrected by the same error correcting code with no regard to the bit rate. This solves the problem particular to the prior art system that an increase in bit rate aggravates the susceptibility to burst errors.

It will be understood that, although the invention has been described, by way of example, with reference to particular embodiments, variations and modifications thereof, as well as other embodiments may be made within the scope of the appended claims. For example, a receiver for a paging system may include

receiving means for receiving a signal whose bit rate is N•R where N is a positive integer and R is a basic bit rate;

bit rate indicating means for outputting a first signal which is representative of the N;

de-interleaving means for N-degree de-interleaving the received signal in response to said first signal to produce a de-interleaved signal; and

deciding means for deciding whether or not a paging address number included in said de-interleaved signal is an address number which is assigned to said receiver.

## Claims

1. A transmitter for a paging system, including degree indicating means (11) for producing a first signal representative of a degree N of interleaving in response to a signal which is representative of a bit rate N•R, where N is a positive integer and R is a basic bit rate, interleaving means (12) for N-degree interleaving input data having the bit rate N•R in response to the first signal to produce an interleaved signal, and transmitting means (13) for transmitting the interleaved signal.

2. A transmitter in accordance with claim 1, wherein the transmitting means (13) includes means for frequency shift keying (FSK) modulating a carrier wave with the interleaved signal.

3. A transmitter in accordance with claim 1, wherein the interleaving means includes memory means (21) having a first and a second memory bank, means (26, 27) for switching the first and second memory banks to a write-in and a read-out mode alternately, for each interleave block of the input data, first address outputting means (28, 22, 23) for outputting a first address in response to the first signal, delaying means (30) for delaying the first signal by one interleave block of the input data, second address outputting means (29, 24, 25) for outputting a second address, which is produced by N-degree interleaving of the first address, in response to an output of the delaying means, means for writing the input data in a memory area of any one of the first and second memory banks which corresponds to the first address, and means for reading the interleaved signal out of a memory area of any one of the first and second memory banks which corresponds to the second address.

4. A transmitter in accordance with claim 3, wherein the memory means includes a random access memory (21).

5. A transmitter in accordance with claim 3, wherein the interleave block has a length of N x L where L is a length which constitutes one frame of the input data at the basic bit rate, each of the first and second address outputting means including an N-bit counter (24) and an L-bit counter (25).

6. A receiver for a paging system, including receiving means (102) for receiving a signal containing input data whose bit rate is $N \cdot R$ where N is a positive integer representative of the degree of interleaving and R is a basic bit rate, bit rate indicating means (104) for outputting a first signal representative of the degree N of interleaving, the first signal being stored in advance, de-interleaving means (103) for N-degree de-interleaving the received signal in response to the first signal to produce a de-interleaved signal, and deciding means (105) for deciding whether or not a paging address number included in the de-interleaved signal is an address number which is assigned to the receiver.

7. A receiver in accordance with claim 6, further including alarm means (106) for producing an audible alarm in response to an output of the deciding means (105).

8. A receiver in accordance with claim 6, wherein the de-interleaving means (103) includes memory means (201) having a first and a second memory bank, means (204, 205) for switching the first and second memory banks to a write-in and a read-out mode alternately, for each interleave block of the input data, first address outputting means for outputting a first address in response to the first signal, second address outputting means (206, 207) for outputting a second address, which is produced by applying N-degree de-interleave to the first address, in response to the first signal, means for writing the received data in a memory area of any one of the first and second memory banks which corresponds to the first address, and means for reading the de-interleaved signal out of a memory area of any one of the first and second memory banks which corresponds to the second address.

9. A receiver in accordance with claim 8, wherein the memory means includes a random access memory (201).

10. A receiver in accordance with claim 8, wherein the interleave block has a length of N x L where L is a length which constitutes one frame of the input data at the basic bit rate, each of the first and second address outputting means including an N-bit counter (207) and an L-bit counter (206).

11. A paging system including means (12, 13) responsive to a first signal for N-degree interleaving a paging signal having a bit rate of $N \cdot R$ where N is a positive integer representative of the degree of interleaving, and R is a basic bit rate and transmitting the N-degree interleaved paging signal, degree indicating means (11) for producing the first signal representative of the degree N of interleaving in response to a signal which is representative of the bit rate $N \cdot R$, means (103) responsive to a second signal for N-degree de-interleaving signal, bit-rate indicating means (104) for outputting the second signal representative of the degree N of de-interleaving, the second signal being stored in advance, and deciding means (105) for deciding whether or not the de-interleaved signal includes a desired paging signal.

12. A system in accordance with claim 11, further including means (106) for producing an audible alarm in response to an output of the deciding means (105) which shows that the de-interleaved signal includes the desired paging signal.

13. A method of transmitting and receiving a paging signal, including the steps of N-degree interleaving, in response to a first signal, a paging signal, whose bit rate is N•R where N is a positive integer, representative of the degree of interleaving of the paging signal, and R is a basic bit rate, outputting the first signal representative of the degree N of interleaving in response to a signal which is representative of the bit rate N•R, transmitting the interleaved paging signal, N-degree de-interleaving, in response to a second signal, the transmitted paging signal to produce a de-interleaved signal, storing, in advance, the second signal representative of the N-degree of de-interleaving, and outputting the stored second signal to the N-degree deinterleaving step, and deciding whether or not the de-interleaved signal includes a desired paging signal.

14. A method in accordance with claim 13, further including the step of generating an audible alarm when it is decided that the de-interleaved signal includes the desired paging signal.

15. A method of receiving a paging signal, including the steps of receiving a signal whose bit rate is N•R where N is a positive integer representative of the degree N of interleaving, and R is a basic bit rate, storing, in advance, a first signal representative of a degree N of de-interleaving, N-degree de-interleaving the received signal in response to the stored first signal to produce a de-interleaved signal, and deciding whether or not the de-interleaved signal includes a desired paging signal.

16. A method in accordance with claim 15, further including the step of producing an audible alarm when the de-interleaved signal includes the desired paging signal.

**Patentansprüche**

1. Sender für ein Rufsystem, mit einer Gradanzeige (11) zum Erzeugen eines ersten Signals entsprechend einem Verschachtelungsgrad N als Antwort auf ein Signal entsprechend einer Bitrate N•R, wobei N eine positive ganze Zahl und R eine Basisbitrate ist, mit einer Verschachtelungseinrichtung (12) für N-gradige Verschachtelungseingangsdaten mit der Bitrate N•R in Antwort auf das erste Signal zum Erzeugen eines Verschachtelungssignals, und mit einer Sendeeinrichtung (13) zum Senden des Verschachtelungssignals.

2. Sender nach Anspruch 1, wobei die Sendeeinrichtung (13) eine Einrichtung zur Frequenzumtastung (FSK) aufweist, die eine Trägerwelle mit dem verschachtelten Signal moduliert.

3. Sender nach Anspruch 1, wobei die Verschachtelungseinrichtung aufweist: eine Speichereinrichtung (21) mit einer ersten und einer zweiten Speicherbank, eine Einrichtung (26, 27) zum Umschalten der ersten und zweiten Speicherbank abwechselnd in einen Schreib- und einen Lesemodus für jeden Verschachtelungsblock der Eingangsdaten, eine erste Adreßausgabeeinrichtung (28, 22, 23) zum Ausgeben einer ersten Adresse in Antwort auf das erste Signal, eine Verzögerungseinrichtung (30) zum Verzögern des ersten Signals um einen Verschachtelungsblock der Eingangsdaten, eine zweite Adreßausgabeeinrichtung (29, 24, 25) zum Ausgeben einer zweiten Adresse, die durch N-gradige Überlappung der ersten Adresse in Antwort auf den Ausgang der Verzögerungseinrichtung gebildet wird, eine Einrichtung zum Schreiben der Eingangsdaten in einen Speicherbereich der ersten und/oder der zweiten Speicherbank, die der ersten Adresse entspricht, und eine Einrichtung zum Auslesen des verschachtelten Signals aus einem Speicherbereich der ersten und/oder zweiten Speicherbank, die der zweiten Adresse entspricht.

4. Sender nach Anspruch 3, wobei die Speichereinrichtung einen Speicher (21) mit wahlfreiem Zugriff aufweist.

5. Sender nach Anspruch 3, wobei der Verschachtelungsblock eine Länge N•L hat, wobei L eine Länge ist, die einen Rahmen der Eingangsdaten bei der Basisbitrate bildet, und jede der ersten und zweiten Adreßausgabeeinrichtungen einen N-Bit-Zähler (24) und einen L-Bit-Zähler (25) aufweisen.

6. Empfänger für ein Rufsystem, mit einer Empfangseinrichtung (102) zum Empfangen eines Signals, das Eingangsdaten mit einer Bitrate von N•R enthält, wobei N eine positive ganze Zahl entsprechend dem Verschachtelungsgrad und R eine Basisbitrate sind, eine Bitratenausgabeeinrichtung (104) zum Ausgeben eines ersten Signals entsprechend dem Verschachtelungsgrad N, wobei das erste Signal vorgespeichert wird, einer Trenneinrichtung (103) zum N-gradigen Entschachteln des empfangenen Signals in Antwort auf das erste Signal, um ein entschachteltes Signal zu erzeugen, und mit einer Entscheidungseinrichtung (105) zum Entscheiden, ob eine in dem entschachtelten Signal enthaltene Rufadreßnummer eine dem Empfänger zugeordnete Adreßnummer ist.

7. Empfänger nach Anspruch 6 mit einer Alarmeinrichtung (106) zum Erzeugen eines Tonsignals in Antwort auf ein Ausgangssignal der Entscheidungseinrichtung (105).

8. Empfänger nach Anspruch 6, wobei die Trenneinrichtung (103) folgende Bestandteile aufweist: einen Speicher (201) mit einer ersten und einer zweiten Speicherbank, eine Einrichtung (204, 205) zum Umschalten der ersten und der zweiten Speicherbank abwechselnd in einen Schreib- und einen Lesemodus für jeden Verschachtelungsblock der Eingangsdaten, eine erste Adressenausgabeeinrichtung zum Ausgeben einer ersten Adresse in Antwort auf das erste Signal, eine zweite Adressenausgabeeinrichtung (206, 207) zum Ausgeben einer zweiten Adresse in Antwort auf das erste Signal, die durch N-gradige Entschachtelung der ersten Adresse erzeugt wird, eine Einrichtung zum Schreiben der empfangenen Daten in einen Speicherbereich der ersten und/oder der zweiten Speicherbank entsprechend der ersten Adresse, und eine Einrichtung zum Lesen des entschachtelten Signal aus einem Speicherbereich der ersten und/oder der zweiten Speicherbank entsprechend der zweiten Adresse.

9. Empfänger nach Anspruch 8, wobei die Speichereinrichtung einen Speicher (201) mit wahlfreiem Zugriff aufweist.

10. Empfänger nach Anspruch 8, wobei der Verschachtelungsblock eine Länge $N \cdot L$ hat, wobei die Länge L einen Rahmen der Eingangsdaten bei der Basisbitrate bildet, und wobei jede der ersten und zweiten Adressenausgabeeinrichtungen einen N-Bit-Zähler (207) und eine L-Bit-Zähler (206) aufweisen.

11. Rufsystem mit einer Einrichtung (12, 13), die auf ein erstes Signal für N-gradige Verschachtelung eines Rufsignals mit einer Bitrate $N \cdot R$ anspricht, wobei N eine positive ganze Zahl ist und den Verschachtelungsgrad wiedergibt und wobei R eine Basisbitrate ist, und zum Senden des N-gradig verschachtelten Rufsignals, einer Gradanzeigeeinrichtung (11) zum Erzeugen des ersten Signals entsprechend dem Verschachtelungsgrad N in Antwort auf ein Signal entsprechend der Bitrate $N \cdot R$, einer Einrichtung (103) in Antwort auf ein zweites Signal für ein N-gradiges Trennsignal, einer Bitratenanzeigeeinrichtung (104) zum Ausgeben des zweiten Signals entsprechend dem Entschachtelungsgrad N, wobei das zweite Signal vorgespeichert wird, und mit einer Entscheidungseinrichtung (105) zum Entscheiden, ob das Trennsignal ein gewünschtes Rufsignal enthält.

12. System nach Anspruch 11, ferner mit einer Einrichtung (106) zum Erzeugen eines Tonalarms in Antwort auf ein Ausgangssignal der Entscheidungseinrichtung (105), das zeigt, daß das getrennte Signal das gewünschte Rufsignal enthält.

13. Verfahren zum Senden und Empfangen eines Rufsignals mit den folgenden Verfahrensschritten: N-gradige Verschachtelung als Antwort auf ein erstes Signal ein Rufsignal, dessen Bitrate $N \cdot R$ ist, wobei N eine positive ganze Zahl entsprechend dem Verschachtelungsgrad des Rufsignals und R eine Basisbitrate sind, Ausgeben des ersten Signals entsprechend dem Verschachtelungsgrad N in Antwort auf ein Signal entsprechend der Bitrate $N \cdot R$, Senden des verschachtelten Rufsignals, N-gradige Entschachtelung des gesendeten Rufsignals in Antwort auf ein zweites Signal, um ein Trennsignal zu erzeugen, Vorspeichern des zweiten Signals entsprechend der N-gradigen Entschachtelung und Ausgeben des gespeicherten zweiten Signals an den N-gradigen Entschachtelungsschritt und Entscheiden, ob das getrennte Signal ein gewünschtes Rufsignal enthält.

14. Verfahren nach Anspruch 13, ferner mit dem Schritt zum Erzeugen eines Tonalarms, wenn festgestellt wird, daß das Trennsignal das gewünschte Rufsignal enthält.

15. Verfahren zum Empfangen eines Rufsignals mit den folgenden Verfahrensschritten: Empfangen eines Signals mit einer Bitrate $N \cdot R$, wobei N eine positive ganze Zahl entsprechend dem Verschachtelungsgrad N und R eine Basisbitrate sind, Vorspeichern eines ersten Signals entsprechend einem Entschachtelungsgrad N, N-gradige Entschachtelung des empfangenen Signals in Antwort auf das gespeicherte erste Signal zum Erzeugen eines Trennsignals und Entscheiden, ob das getrennte Signal ein gewünschtes Rufsignal enthält.

**16.** Vefahren nach Anspruch 15, ferner mit dem Schritt zum Erzeugen eines Tonalarms, wenn das Trennsignal das gewünschte Rufsignal enthält.

**Revendications**

**1.** Emetteur pour un système de recherche de personne, comprenant un moyen indicateur de degré (11) pour produire un premier signal représentatif d'un degré (N) d'imbrication en réponse à un signal qui est représentatif d'un débit binaire N•R, où N est un nombre entier positif et R est un débit binaire de base, un moyen d'imbrication (12) pour l'imbrication à N degrés de la donnée d'entrée ayant le débit binaire N•R en réponse au premier signal afin de produire un signal imbriqué, et un moyen de transmission (13) pour transmettre le signal imbriqué.

**2.** Emetteur selon la revendication 1, dans lequel le moyen de transmission (13) comprend un moyen pour moduler par déplacement de fréquence (FSK) une onde porteuse avec le signal imbriqué.

**3.** Emetteur selon la revendication 1, dans lequel le moyen d'imbrication comprend un moyen de mémoire (21) ayant un premier bloc de mémoire et un second bloc de mémoire, un moyen (26, 27) pour commuter par alternance les premier et second blocs de mémoire en mode d'écriture et en mode de lecture, pour chaque bloc d'imbrication de la donnée d'entrée, un premier moyen de sortie d'adresse (28, 22, 23) pour sortir une première adresse en réponse au premier signal, un moyen à retard (30) pour retarder le premier signal d'un bloc d'imbrication de la donnée d'entrée, un second moyen de sortie d'adresse (29, 24, 25) pour sortir une seconde adresse, qui est produite par l'imbrication à N degrés de la première adresse, en réponse à une sortie du moyen à retard, un moyen pour écrire la donnée d'entrée dans une zone de mémoire de l'un quelconque des premier et second blocs de mémoire qui correspond à la première adresse, et un moyen pour lire le signal imbriqué dans une zone de mémoire de l'un quelconque des premier et second blocs de mémoire qui correspond à la seconde adresse.

**4.** Emetteur selon la revendication 3, dans lequel le moyen de mémoire comprend une mémoire à accès sélectif (21).

**5.** Emetteur selon la revendication 3, dans lequel le bloc d'imbrication a une longueur N x L, où L est une longueur qui constitue une trame de la donnée d'entrée au débit binaire de base, chacun des premier et second moyens de sortie d'adresse comportant un compteur à N bits (24) et un compteur à L bits (25).

**6.** Récepteur pour système de recherche de personne, comprenant un moyen de réception (102) pour recevoir un signal contenant une donnée d'entrée dont le débit binaire est N•R où N est un nombre entier positif représentant le degré d'imbrication et R est un débit binaire de base, un moyen indicateur de débit binaire (104) pour sortir un premier signal représentatif du degré N d'imbrication, le premier signal étant stocké à l'avance, un moyen de désimbrication (103) pour désimbriquer à N degrés le signal reçu en réponse au premier signal afin de produire un signal désimbriqué, et un moyen de décision (105) pour décider si oui ou non un numéro d'adresse de recherche de personne inclus dans le signal désimbriqué est un numéro d'adresse qui est affecté au récepteur.

**7.** Récepteur selon la revendication 6, comprenant en outre un moyen d'alarme (106) pour produire une alarme audible en réponse à une sortie du moyen de décision (105).

**8.** Récepteur selon la revendication 6, dans lequel le moyen de désimbrication (103) comprend un moyen de mémoire (201) ayant un premier et second bloc de mémoire, un moyen (204, 205) pour commuter en alternance les premier et second blocs de mémoire en un mode d'écriture et un mode de lecture, pour chaque bloc d'imbrication de la donnée d'entrée, un premier moyen de sortie d'adresse pour sortir une première adresse en réponse au premier signal, un second moyen de sortie d'adresse (206, 207) pour sortir une seconde adresse, qui est produite en appliquant une désimbrication à N degrés à la première adresse, en réponse au premier signal, un moyen pour écrire la donnée reçue dans une zone de mémoire de l'un quelconque des premier et second blocs de mémoire qui correspond à la première adresse, et un moyen pour lire le signal désimbriqué dans une zone de mémoire de l'un quelconque des premiers et second blocs de mémoire qui correspond à la seconde adresse.

**9.** Récepteur selon la revendication 8, dans lequel le moyen de mémoire comprend une mémoire à accès sélectif (201).

**10.** Récepteur selon la revendication 8, dans lequel le bloc d'imbrication a une longueur M x L, où L est une longueur qui constitue une trame de la donnée d'entrée au débit binaire de base, chacun des premier et second moyens de sortie d'adresse comportant un compteur à N bits (207) et un compteur à L bits (206).

**11.** Système de recherche de personne comportant un moyen (12, 13) répondant à un premier signal pour l'imbrication à N degrés d'un signal de recherche de personne ayant un débit binaire N•R où N est un nombre entier positif représentatif du degré d'imbrication, et R est un débit binaire de base, et la transmission du signal de recherche de personne imbriqué à N degrés, un moyen indicateur de degré (11) pour produire le premier signal représentatif du degré N de l'imbrication en réponse à un signal qui est représentatif du débit binaire N•R, un moyen (103) répondant un second signal pour la désimbrication à N degrés, un moyen indicateur de débit binaire (104) pour sortir le second signal représentatif du dégré N de la désimbrication, le second signal étant stocké à l'avance, et un moyen de décision (105) pour décider si oui ou non le signal désimbriqué comprend un signal désiré de recherche de personne.

**12.** Système selon la revendication 11, comprenant en outre un moyen (106) pour produire une alarme audible en réponse à une sortie du moyen de décision (105) qui montre que le signal désimbriqué comprend le signal désiré de recherche de personne.

**13.** Procédé de transmission et de réception d'un signal de recherche de personne, comprenant les étapes consistant à imbriquer à N degrés, en réponse à un premier signal, un signal de recherche de personne, dont le débit binaire est N•R où N est un nombre entier positif, représentatif du degré de l'imbrication du signal de recherche de personne, et R est un débit binaire de base, à sortir le premier signal représentatif du degré N d'imbrication en réponse à un signal qui est représentatif du débit binaire N•R, à transmettre le signal imbriqué de recherche de personne, à désimbriquer à N degrés, en réponse à un second signal, le signal transmis de recherche de personne pour produire un signal désimbriqué, à stocker, à l'avance, le second signal représentatif du degré N de la désimbrication, et à sortir le second signal stocké pour l'étape de désimbrication à N degrés, et à décider si oui ou non le signal désimbriqué comprend un signal désiré de recherche de personne.

**14.** Procédé selon la revendication 13, comprenant en outre l'étape de production d'une alarme audible lorsqu'il est décidé que le signal désimbriqué comprend le signal désiré de recherche de personne.

**15.** Procédé pour recevoir un signal de recherche de personne, comprenant les étapes consistant à recevoir un signal dont le débit binaire est N•R où N est un nombre entier positif représentatif du degré N de l'imbrication, et R est un débit binaire de base, à stocker, à l'avance, un premier signal représentatif d'un degré N de la désimbrication, à désimbriquer à N degrés un signal reçu en réponse au premier signal stocké pour produire un signal désimbriqué, et à décider si oui ou non le signal désimbriqué comprend un signal désiré de recherche de personne.

**16.** Procédé selon la revendication 15, comprenant en outre l'étape consistant à produire une alarme audible lorsque le signal désimbriqué comprend le signal désiré de recherche de personne.

Fig.1

Fig.2

10

## Fig.3A

N = 1
WRITE-IN ORDER

## Fig.3B

N = 1
READ-OUT ORDER

## Fig.3C

N = 2
WRITE-IN ORDER

## Fig.3D

N = 2
READ-OUT ORDER

Fig.4

EP 0 264 205 B1

Fig.5

EP 0 264 205 B1

EP 0 264 205 B1

— ONE INTERLEAVE BLOCK —

$d_3$

| $a_{11}$ | --- | $a_{1L}$ | $a_{21}$ | $b_{21}$ | $a_{22}$ | -- | $a_{2L}$ | $b_{2L}$ | $a_{31}$ | $b_{31}$ | $c_{31}$ | $d_{31}$ | $a_{32}$ | $b_{32}$ | -- | -- | $a_{3L}$ | $b_{3L}$ | $c_{3L}$ | $d_{3L}$ |

BIT RATE = R   BIT RATE = 2R   BIT RATE = 4R

TIME

$d_4$

N=1: $a_{11}$ --- $a_{1L}$

N=2: $a_{11}$ -- $a_{1L}$ $a_{11}$ -- $a_{1L}$ $a_{21}$ -- $a_{21}$ $b_{21}$ -- $b_{2L}$

N=4: $a_{11}$ -- $a_{1L}$ $a_{11}$ -- $a_{1L}$ $a_{11}$ -- $a_{1L}$ $a_{11}$ -- $a_{1L}$ $a_{21}$ -- $a_{2L}$ $a_{21}$ -- $a_{2L}$ $b_{21}$ -- $b_{2L}$ $b_{21}$ -- $b_{2L}$ $a_{31}$ -- $a_{3L}$ $b_{31}$ -- $b_{3L}$ $c_{31}$ -- $c_{3L}$ $d_{31}$ -- $d_{3L}$

Fig.6

Fig.7

EP 0 264 205 B1

FIRST BLOCK

r

c

$a_{1(L-1)}$  $b_{1(L-1)}$  $a_{2(L-1)}$  $b_{2(L-1)}$

$d_3$ | $b_{0L}$ $a_{11}$ $b_{11}$ $a_{12}$ $b_{12}$ $a_{13}$ $b_{13}$ $a_{14}$ $b_{14}$ — — — — | $a_{1L}$ $b_{1L}$ $a_{21}$ $b_{21}$ $a_{22}$ $b_{22}$ $a_{23}$ $b_{23}$ $a_{24}$ $b_{24}$ — — — — | $a_{2L}$ $b_{2L}$ $a_{30}$ — — —

$d_4$ | $a_{01}$ $a_{02}$ $a_{03}$ — — $a_{0L}$ $b_{01}$ $b_{02}$ $b_{03}$ — — $b_{0L}$ $a_{11}$ $a_{12}$ $a_{13}$ — — $a_{1L}$ $b_{11}$ $b_{12}$ $b_{13}$ — — $b_{1L}$

$a_{0(L-1)}$  $b_{0(L-1)}$  $a_{1(L-1)}$  $b_{1(L-1)}$

FIRST BLOCK

| $A_{IN}$ | | |
|---|---|---|
| $a_1$ | 0 1 0 1 — — 0 1 0 1 0 1 — 0 1 0 1 0 1 — — 0 1 0 1 0 1 — — 0 1 0 1 |
| $a_2$ | 0 0 1 1 2 2 — — — — — — L-2 L-2 L-1 L-1 0 0 1 1 2 2 — — — — — — L-2 L-2 L-1 L-1 0 0 |
| $a_3$ | 0 0 0 0 0 0 — — — — — — 0 0 0 0 1 1 1 1 1 1 — — — — — — 1 1 1 1 0 0 |

| $A_{OUT}$ | | |
|---|---|---|
| $a'_1$ | 0 1 2 — — — L-2 L-1 0 1 2 — — — L-2 L-1 0 1 2 — — — L-2 L-1 0 1 2 — — — L-2 L-1 0 1 |
| $a'_2$ | 0 0 0 — — 0 0 1 1 1 — — 1 1 0 0 0 — — 0 0 1 1 1 — — 1 1 0 0 |
| $a'_3$ | 1 1 1 — — 1 1 1 1 1 — — 1 1 0 0 0 — — 0 0 0 0 0 — — 0 0 1 1 |

TIME

Fig. 8